# FASCICULE DE BREVET EUROPEEN

(11) **EP 3 095 223 B1**
(45) Date de publication et mention de la délivrance du brevet: **16.03.2022**
(21) Numéro de dépôt: 15700588.5
(22) Date de dépôt: 16.01.2015
(51) Int. Cl.: H04L 29/06, H04W 12/02, H04W 12/12, H04L 9/32, G06Q 20/32, G06Q 20/40, H04W 12/10, G06Q 20/38, H04L 9/00, H04L 9/12

(54) **MÉTHODE DE TRANSMISSION DE DONNÉES CHIFFRÉES, MÉTHODE DE RÉCEPTION, DISPOSITIFS ET PROGRAMMES D'ORDINATEUR CORRESPONDANTS**
VERFAHREN ZUR ÜBERTRAGUNG VON VERSCHLÜSSELTEN DATEN, EMPFANGSVERFAHREN, VORRICHTUNGEN UND COMPUTERPROGRAMME IM ZUSAMMENHANG DAMIT
METHOD OF TRANSMITTING ENCRYPTED DATA, METHOD OF RECEPTION, DEVICES AND COMPUTER PROGRAMS CORRESPONDING THERETO

(30) Priorité: 17.01.2014 FR 1450408
(43) Date de publication de la demande: 23.11.2016
(73) Titulaire: Ingenico Group, 75015 Paris (FR)
(72) Inventeur: NACCACHE, David, F-75018 Paris (FR)
(74) Mandataire: Vidon Brevets & Stratégie
(86) Numéro de dépôt international: PCT/EP2015/050823
(87) Numéro de publication internationale: WO 2015/107175

(56) Documents cités:
- WO-A1-01/99337
- WO-A2-2007/001237
- US-A1- 2013 246 801

## Description

### 1. Domaine de l'invention

L'invention se rapporte au domaine du paiement sans contact. L'invention se rapporte plus particulièrement au domaine de la transmission de données entre un terminal d'utilisateur, tel qu'un téléphone portable et un terminal de paiement pour effectuer un paiement sans contact. L'invention est définie dans les revendications indépendantes. Les modes de réalisation préférés sont définis dans les revendications dépendantes.

### 2. Art Antérieur

Le paiement sans contact comprend un ensemble de techniques permettant aux utilisateurs de réaliser des paiements sans nécessité d'insérer une carte de paiement au sein d'un terminal de paiement (carte à puce ou carte magnétique). Typiquement, le paiement sans contact peut prendre deux formes : dans une première forme, une carte de paiement sans contact est utilisée. Pour réaliser un paiement, la carte sans contact est présentée à proximité d'un lecteur sans contact présent dans le terminal de paiement. En fonction des systèmes, le paiement peut nécessiter en plus la saisie d'un code confidentiel par l'utilisateur.

Dans une deuxième forme, un terminal mobile est utilisé à la place de la carte sans contact. Un tel terminal mobile comprend par exemple un module NFC et/ou un module GPRS et/ou un module bluetooth. Le module idoine est utilisé pour transmettre de l'information au terminal de paiement. Typiquement, l'information transmise par le terminal de l'utilisateur au terminal de paiement est de même nature que l'information transmise par la carte sans contact. Il peut par exemple s'agir de données bancaires, telles qu'un identifiant bancaire et un numéro de compte bancaire. Il peut également s'agir d'un identifiant de portefeuille numérique et un identifiant de prestataire de paiement. Ainsi, au moins un identifiant est transmis par le terminal de l'utilisateur au terminal de paiement. Alternativement, cet identifiant peut également être transmis par un module de communication complémentaire attaché au terminal de l'utilisateur. Dans ce cas, l'information transmise peut l'être par ce module de communication complémentaire et non par le terminal de l'utilisateur lui-même.

Quoi qu'il en soit, une information d'identification est transmise au terminal de paiement. Il est important que cette information d'identification, également appelée identifiant, soit sécurisée préalablement à sa transmission au terminal de paiement. Pour ce faire, il existe de nombreuses solutions de chiffrement de l'information avant sa transmission. Par exemple un principe de chiffrement à base de clés asymétriques peut être implémenté, avec un échange préalable de clés. La méthode de chiffrement utilisée dépend en réalité de plusieurs facteurs : il n'est ainsi pas aisé de prévoir un chiffrement dynamique lorsqu'une carte sans contact est utilisée car le processeur embarqué sur cette carte (lorsqu'il y en a un) ne possède pas une puissance de calcul suffisante pour réaliser un tel chiffrement. Un chiffrement dynamique est plus adapté lorsque l'identifiant est transmis depuis un terminal mobile, qui possède lui des ressources de traitement plus conséquentes.

Cependant, les techniques utilisées pour chiffrer les données transmises du terminal de l'utilisateur vers le terminal de paiement souffrent de défaut de sécurisation. Par exemple il est théoriquement possible d'installer, à l'insu du commerçant, un dispositif d'enregistrement des informations transmises par le terminal de l'utilisateur.

Les informations transmises par le terminal de l'utilisateur sont enregistrées dans un dispositif "espion". Bien que ces informations soient chiffrées, il est tout à fait envisageable de retransmettre ces informations à l'identique lors d'un rejeu frauduleux. Le fraudeur, qui a pris soin d'enregistrer les informations chiffrées transmises par le terminal de l'utilisateur, et qui a éventuellement pris soin de repérer le code d'identification personnel saisit par la suite par l'utilisateur peut alors théoriquement rejouer la transaction ultérieurement en transmettant a un terminal de paiement les informations chiffrées préalablement enregistrées. Bien entendu, ce type d'attaque est possible lorsque certaines conditions sont remplies, notamment lorsque le fraudeur est apte à identifier le protocole de chiffrement mis en œuvre. Lorsque les clés de chiffrement sont créées au moment de la transaction par un échange préalable de clés entre le terminal de l'utilisateur et le terminal de paiement, la situation est plus complexe que celle décrite (notamment lorsque le terminal de l'utilisateur dispose d'une module de communication sans contact).

En revanche, lorsque le terminal de l'utilisateur ne dispose pas d'un module de communication sans contact, une technique employée (pour permettre quand même un paiement sans contact) consiste à utiliser à la place un module de communication basé sur une modulation d'une séquence de chiffres qui est captée par une tête de lecture magnétique du terminal de paiement et interprétée par celui-ci comme un « passage »
d'une carte magnétique virtuelle au sein du terminal de paiement. Cette technique permet de réaliser des paiements sans contact avec des terminaux de paiement "de base" équipés d'un lecteur de carte magnétique. Au niveau de la sécurisation de la transaction, cette technique est clairement génératrice de failles qui sont exploitables par la technique explicitée préalablement car le terminal de paiement n'est pas équipé pour différentier une carte virtuelle frauduleuse d'une carte virtuelle.

La demande internationale WO2007/001237 propose un procédé pour assurer la confidentialité, l'intégralité et la validité des données durant la transmission. Lors du chiffrement des données d'entrée, une valeur temporelle indiquant l'heure du chiffrement des données est introduite afin de générer des données chiffrées dynamiques. Cependant, le délai entre l'heure du chiffrement et l'heure de la réception des données chiffrées est relativement important. Ce qui rend la validation des données chiffrées moins fiable. La demande de brevet américain US 2013/246801 propose un procédé permettant à un récepteur de vérifier si les données reçues sont générées par l'émetteur et d'empêcher les attaques par « rejeu ». La demande internationale WO01/99337 divulgue un procédé d'authentification biométrique sécurisé. Ces demandes de brevet n'enseignent pas des solutions pour améliorer la fiabilité de la validation des données chiffrées.

Il existe donc un besoin de fournir une méthode de transmission qui soit insensible aux failles explicitées préalablement.

### 3. Résumé de l'invention

La technique proposée ne présente pas ces inconvénients de l'art antérieur. Plus particulièrement, la technique proposée permet d'éviter un rejeu de données préalablement transmises tout en ne nécessitant pas d'échange préalable de clé. La technique proposée se présente sous la forme d'une méthode de transmission de données, d'un premier terminal, dit terminal émetteur vers un deuxième terminal, dit terminal récepteur. Une telle méthode comprend :
- une étape d'obtention d'une donnée temporelle courante ;
- une étape de détermination d'une donnée temporelle de transmission en fonction de la donnée temporelle courante et d'au moins un paramètre prédéterminé ;
- une étape d'obtention d'une donnée à chiffrer à partir d'au moins une donnée à transmettre et de ladite au moins une donnée temporelle courante ;
- une étape de chiffrement, à l'aide d'une clé de chiffrement, de ladite donnée à chiffrer préalablement obtenue, délivrant une donnée chiffrée ;
- une étape de transmission de ladite donnée chiffrée en fonction de ladite donnée temporelle de transmission.

Ainsi, l'intégration d'une donnée temporelle de transmission au sein de la donnée à chiffrer permet d'introduire un élément anti-rejeu suffisamment difficile à contrecarrer pour augmenter de manière significative le niveau de sécurisation de la transmission.

Selon une caractéristique particulière, l'étape de détermination de la donnée temporelle de transmission comprend une étape d'ajout d'une durée définie par le paramètre prédéterminé à la donnée temporelle courante.

Ainsi, en ajoutant d'une durée, qui peut être variable et qui est fonction du paramètre de transmission, on assure que même en cas d'interception, la donnée chiffrée ne peut pas être rejouée, car elle le sera forcément postérieurement à la date et à l'heure à laquelle la donnée a été émise.

Selon une caractéristique particulière, l'étape d'obtention de la donnée à chiffrer comprend une étape de concaténation de ladite au moins une donnée à transmettre et de ladite au moins une donnée temporelle courante.

Ainsi, l'obtention de la donnée à chiffrer est simple.

Selon une caractéristique particulière, l'étape de transmission de ladite donnée chiffrée en fonction de ladite donnée temporelle de transmission comprend une étape de mise en attente de la transmission jusqu'à un temps sensiblement proche de la donnée temporelle de transmission et lorsque ce temps est atteint, une étape de transmission de ladite donnée chiffrée à un temps sensiblement égal au temps défini par la donnée temporelle de transmission.

Dans une autre mode de réalisation, l'invention se rapporte également à un dispositif de transmission de donnée, dispositif mis en œuvre par un premier terminal, dit terminal émetteur à destination d'un deuxième terminal, dit terminal récepteur. Un tel dispositif comprend :
- des moyens d'obtention d'une donnée temporelle courante ;
- des moyens de détermination d'une donnée temporelle de transmission en fonction de la donnée temporelle courante et d'au moins un paramètre prédéterminé ;
- des moyens d'obtention d'une donnée à chiffrer à partir d'au moins une donnée à transmettre et de ladite au moins une donnée temporelle courante ;
- des moyens de chiffrement, à l'aide d'une clé de chiffrement, de ladite donnée à chiffrer préalablement obtenue, délivrant une donnée chiffrée ;
- des moyens de transmission de ladite donnée chiffrée en fonction de ladite donnée temporelle de transmission.

L'invention se rapporte également, dans sa version complémentaire au procédé préalablement décrit, à un procédé de réception de données par un terminal récepteur. Selon l'invention, un tel procédé comprend :
- une étape de réception, par le terminal récepteur, d'une donnée chiffrée ;
- une étape d'obtention d'une clé de chiffrement permettant de déchiffrer la donnée chiffrée ;
- une étape de déchiffrement de la donnée chiffrée, délivrant une donnée déchiffrée.
- une étape d'obtention, à partir de la donnée déchiffrée, d'une donnée reçue et d'une donnée temporelle de transmission ;
- une étape de validation de la donnée reçue en fonction de la donnée temporelle de transmission et d'une donnée temporelle courante dudit terminal récepteur.

Selon une caractéristique particulière, l'étape de validation de la donnée reçue comprend :
- une étape de comparaison de la donnée temporelle de transmission et de la donnée temporelle courante dudit terminal récepteur en fonction d'un paramètre de comparaison prédéterminé ; et
- lorsque la différence entre la donnée temporelle de transmission et de la donnée temporelle courante excède le paramètre de comparaison prédéterminé, une étape de rejet de la donnée reçue ;
- lorsque la différence entre la donnée temporelle de transmission et de la donnée temporelle courante est inférieur au paramètre de comparaison prédéterminé, une étape d'acceptation de la donnée reçue ;

Ainsi, en cas de tentative de rejeu d'une donnée chiffrée frauduleusement
acquise, la méthode proposée assure que cette donnée sera rejetée.

L'invention se rapporte également à un serveur de synchronisation temporel qui comprend des moyens de mise en œuvre d'un processus de synchronisation temporel entre un premier terminal et un deuxième terminal afin de faire coïncider leurs horloges.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée pour la transmission de données ;
- la figure 2 présente un synoptique de la technique proposée pour la réception de données
- la figure 3 décrit un dispositif pour la mise en œuvre de la technique proposée pour la transmission de données ;
- la figure 4 décrit un dispositif pour la mise en œuvre de la technique proposée pour la réception et la validation de données.

### 5. Description

### 5.1. Rappel du principe général de l'invention

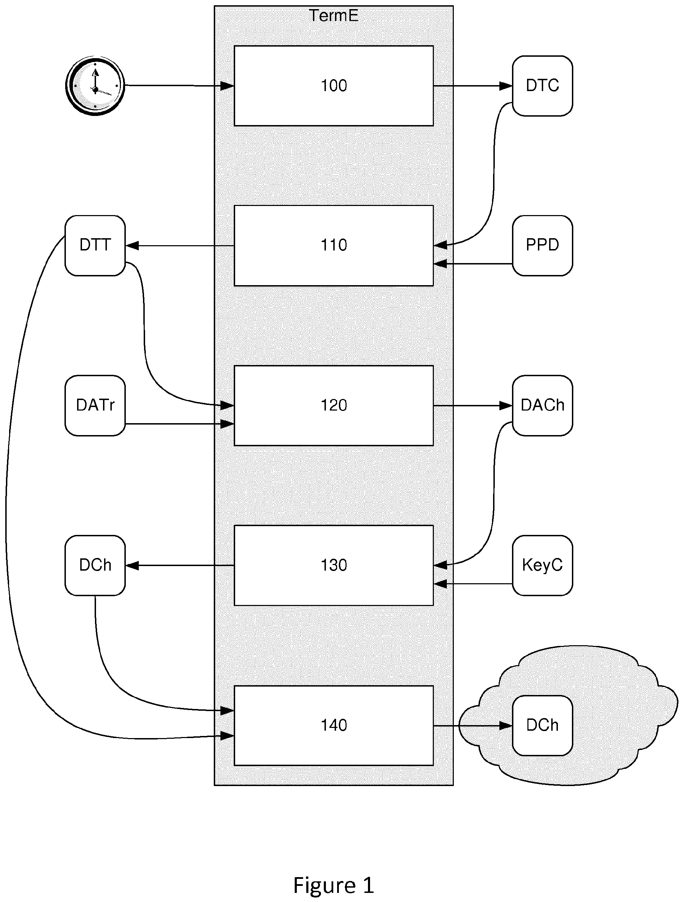

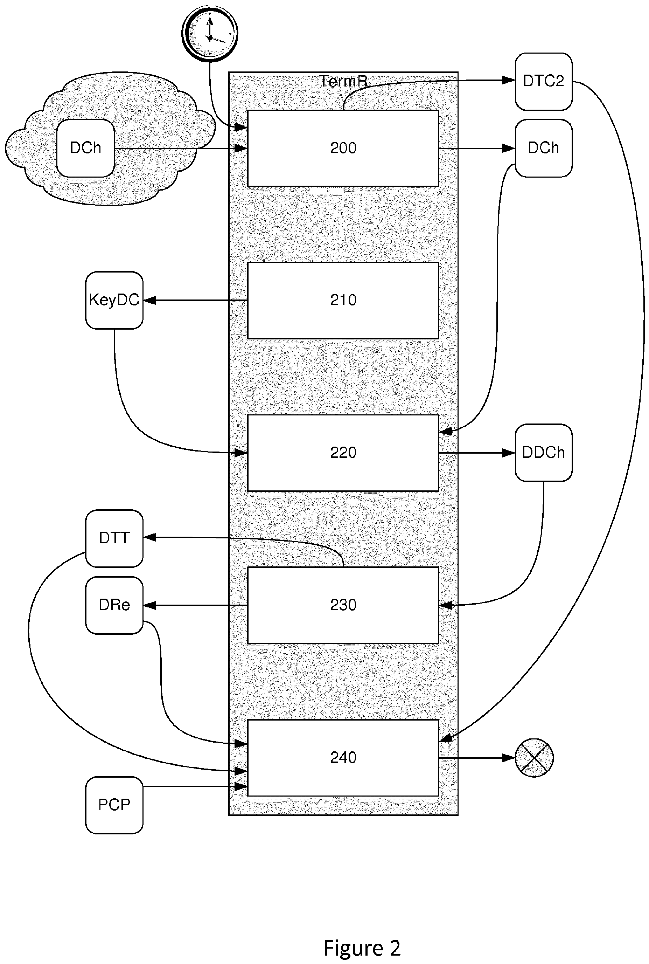

Le principe général de la technique proposé est présenté en relation avec les figures 1 et 2. Comme explicité préalablement, le principe général de la technique proposée consiste à transmettre, à un instant donné, c'est à dire à un instant défini par la donnée temporelle de transmission (DTT), une donnée chiffrée (DCh), cette donnée chiffrée (DCh) étant la résultante d'une opération de chiffrement, avec une clé de chiffrement donnée sur une donnée à chiffrer. La donnée à chiffrer, quant à elle étant la résultante d'une opération réalisée à l'aide de la donnée secrète (qui est typiquement un identifiant bancaire, ou un identifiant de portefeuille ou un identifiant de compte auprès d'un fournisseur de services de paiement) et d'une donnée temporelle de transmission (DTT).

Dans un mode de réalisation particulier, la donnée temporelle de transmission (DTT) se présente sous la forme d'un "timestamp" (de l'anglais pour horodate) ou d'une donnée représentative d'une date et d'une heure (par exemple un entier sur 32 ou 64 bits).

Une caractéristique importante de la technique décrite consiste à transmettre la donnée chiffrée (DCh) en fonction de la donnée temporelle de transmission (DTT) elle-même. Ainsi, dans la technique proposée, la donnée temporelle de transmission (DTT) est utilisée à la fois pour chiffrer la donnée secrète et à la fois pour effectuer la transmission de cette donnée chiffrée (DCh). Ceci est réellement un avantage puisque la technique proposée assure ainsi qu'il n'est pas possible d'effectuer un rejeu de la donnée chiffrée (DCh).

Le principe général de la technique proposée consiste donc à mettre en œuvre les étapes suivantes:
- une étape d'obtention (100) d'une donnée temporelle courante (DTC) ; elle est obtenue sur le terminal émetteur (TermE) (par exemple le terminal de communication de l'utilisateur) ;
- une étape de détermination (110) d'une donnée temporelle de transmission (DTT) en fonction de la donnée temporelle courante (DTC) et d'au moins un paramètre prédéterminé (PPD) ; le paramètre prédéterminé est utilisé pour réaliser une opération sur la donnée temporelle courante (DTC) ; ce paramètre prédéterminé peut être évolutif dans le temps. cela signifie que ce paramètre peut varier au cours du temps et que la valeur de ce paramètre à un instant 't' peut être différente de la valeur de ce paramètre à un instant 't+1' ;
- une étape d'obtention (120) d'une donnée à chiffrer (DaCh) à partir d'au moins une donnée à transmettre (DaTr) (c'est la donnée secrète, par exemple l'identifiant) et de la donnée temporelle de transmission (DTT) ;
- une étape de chiffrement (130), à l'aide d'une clé de chiffrement (KeyC), de ladite donnée à chiffrer (DaCh) préalablement obtenue, délivrant une donnée chiffrée (DCh) ; cette étape de chiffrement met en œuvre une clé de chiffrement qui dépend bien entendu du fournisseur de service de paiement (banque, fournisseur de services, etc.) la clé de chiffrement peut par exemple être disponible au sein d'un conteneur sécurisé installé au sein du terminal émetteur, par l'intermédiaire d'une application idoine, telle qu'une application de gestion de portefeuilles électroniques.
- une étape de transmission (140) de ladite donnée chiffrée (DCh) en fonction de ladite donnée temporelle de transmission (DTT) : une fois la donnée chiffrée (DCh) obtenue, celle-ci est transmise en fonction de la donnée temporelle de transmission (DTT).

Ainsi, on assure qu'il ne sera pas possible d'effectuer un rejeu de la donnée chiffrée (DCh) capturé frauduleusement car celle-ci dépend de la donnée temporelle de transmission (DTT). Plus particulièrement, dans un mode de réalisation particulier, la donnée temporelle de transmission (DTT) est utilisée lors de la réception de la donnée chiffrée (DCh) par le terminal récepteur (TermR) (par exemple le terminal de paiement).

Du côté du terminal récepteur (TermR), le principe général de la technique proposée consiste à mettre en œuvre les étapes suivantes :
- réception (200), par le terminal récepteur (TermR), de la donnée chiffrée (DCh). L'heure à laquelle cette donnée chiffrée est reçue est appelée donnée temporelle courante et est conservée (DTC2) ;
- obtention (210) d'une clé de chiffrement (KeyDC) permettant de déchiffrer la donnée chiffrée (DCh) ;
- déchiffrement (220) de la donnée chiffrée (DCh), délivrant la donnée déchifrée (DDCh) (celle qui a été chiffrée par le terminal émetteur). Ce déchiffrement est réalisé à l'aide de la clé, KeyDC
- obtention (230), à partir de la donnée déchiffrée (DDCh), de la donnée reçue (DRe) (donnée d'identification N) et de la donnée temporelle de transmission (DTT) en réalisant une opération inverse de celle réalisée par le terminal émetteur (TermE);
- validation (240) de la donnée reçue (DRe) en fonction de la donnée temporelle de transmission (DTT) et de la donnée temporelle courante (DTC2) dudit terminal récepteur (TermR).

Lorsque la donnée temporelle de transmission (DTT) et la donnée temporelle courante (DTC) divergent d'un paramètre de contrôle prédéterminé (PCP), la donnée reçue (DRe) est refusée par le terminal récepteur (TermR).

Ainsi, on assure qu'il n'est pas possible de réaliser un rejeu de la transaction par retransmission d'une donnée chiffrée (DCh) qui serait capturée de manière frauduleuse.

Bien entendu, le principe général décrit ici peut astucieusement être dérivé en fonction des modes de réalisation. Plus particulièrement, il est possible de procéder à un calibrage préalable des terminaux (terminal émetteur, terminal récepteur (TermR)). Dans un mode de réalisation spécifique de l'invention, le terminal émetteur (TermE) se calibre sur le terminal récepteur (TermR) afin d'effectuer une synchronisation d'horloge. Dans un mode de réalisation particulier, cette synchronisation est effectuée simplement par le terminal émetteur (TermE)en lisant et en décodant une information représentative d'un temps de synchronisation affiché sur le terminal récepteur (TermR), par exemple par l'intermédiaire d'un écran du terminal récepteur (TermR), préalablement à la mise en œuvre de la transaction entre le terminal émetteur (TermE)et le terminal récepteur (TermR).

Dans un autre mode de réalisation la synchronisation est effectuée par exemple par une application de gestion installée sur le terminal émetteur (TermE) qui se connecte à un serveur temporel particulier afin d'obtenir un temps synchronisé avec celui du terminal récepteur (TermR).

Bien que non obligatoire, cette phase de synchronisation préalable, par l'intermédiaire d'un serveur, permet d'augmenter encore la sécurité de la technique proposée : en effet, ne peuvent être autorisés à se connecter qu'un terminal identifié, c'est à dire un terminal ayant téléchargé une application de gestion auprès d'un fournisseur particulier. Dès lors, la phase de synchronisation débute par l'authentification du terminal et, par voie de conséquence, par sa localisation. Lorsque le terminal récepteur (TermR) reçoit la donnée chiffrée (DCh) transmise par le terminal émetteur, d'une part on est assuré que les deux horloges sont synchronisées. D'autre part, et de manière complémentaire, le terminal récepteur (TermR) peut récupérer la localisation du terminal émetteur (TermE) également par un accès au même serveur de synchronisation. Lorsque la localisation délivrée par le serveur de synchronisation diverge de la localisation du terminal récepteur (TermR), celui-ci peut alors refuser la donnée d'identification N qui lui est transmise. Par localisation, on entend par exemple un identifiant de station de base auquel le terminal émetteur (TermE) peut être connecté.

Par la suite, on décrit un mode de réalisation simple de la technique proposée. Ce mode de réalisation est particulièrement adapté à une mise en œuvre d'un paiement sans contact réalisé entre une terminal de communication d'un utilisateur (tel qu'un smartphone, ou un accessoire connecté à ce smartphone) et un terminal de paiement comprenant une tête de lecture magnétique. Le terminal de l'utilisateur (ou son accessoire connecté), simule la présence d'une carte magnétique. Pour éviter la fraude, le terminal de communication de l'utilisateur et le terminal de paiement mettent en œuvre la technique préalablement décrite.

### 5.2. Description d'un mode de réalisation

Dans ce mode de réalisation, on suppose que les horloges internes du terminal de paiement et du terminal de l'utilisateur sont synchronisées. Dans ce mode de réalisation, on utilise le principe de cette synchronisation pour mettre en œuvre la technique proposée. Cette synchronisation, cependant, n'est pas obligatoire. Il est en effet possible de mettre en œuvre la technique proposée sans synchronisation. Une simple connaissance, par le terminal de l'utilisateur, d'un décalage temporel entre son horloge et l'horloge du terminal de paiement est suffisante pour mettre en œuvre cette technique.

Dans ce mode de réalisation, la donnée temporelle courante (DTC) est un timestamp. Ce timestamp est obtenu à partir de l'horloge du terminal par un simple appel de fonction.

Ici, donc, le terminal de paiement et le terminal de communication de l'utilisateur ont des horloges synchronisées. Le possesseur du terminal de communication souhaite réaliser un achat sans contact en simulant la présence d'une carte magnétique de paiement. Une transaction est donc initialisée du côté du terminal de paiement.

Pour émettre le numéro de carte de crédit N (donnée à transmattre), le terminal de communication obtient la date et l'heure actuelle D (donnée temporelle courante (DTC)). Le terminal ajoute ensuite à cette donnée temporelle courante (DTC) un temps court (typiquement d'une à deux secondes t) défini par le paramètre prédéterminé PPD), soit D'=D+t. Ensuite, le terminal de communication réalise un chiffrement de l'information suivante (N,D'), (concaténation de ces deux données) à l'aide d'une clé de chiffrement et obtient la donnée chiffrée. Il conserve cette donnée chiffrée et vérifie l'écoulement temporel. Lorsque le temps courant est sensiblement égal à l'heure D', le terminal de communication transmet la donnée ainsi chiffrée au terminal de paiement.

Le terminal de paiement (terminal récepteur), par l'intermédiaire de sa tête de lecture magnétique, déchiffre la donnée reçue, vérifie avoir reçu la donnée chiffrée (DCh) sensiblement à l'heure D' et vérifie qu'en le déchiffrant il y trouve bien (N,D'). Lorsque les données attendues ne correspondent pas aux données reçues, l'identifiant fourni n'est pas accepté et la transaction est rejetée.

Ainsi, dans ce mode de réalisation de la technique proposée, il n'est pas possible de réaliser un rejeu de la donnée chiffrée (DCh) capturé frauduleusement car cette donnée ne correspondrait pas à l'heure et à la date du terminal de paiement, et dont le paiement serait rejeté.

Dans un mode de réalisation de la technique proposée, de manière complémentaire et non obligatoire, le terminal émetteur (qui est le terminal de communication de l'utilisateur) utilise un module GPRS du terminal et/ou un module bluetooth et/ou l'écran du terminal de communication pour effectuer la transmission de la donnée chiffrée au terminal de paiement. En effet, l'objectif de ce mode de réalisation est de faire parvenir des données à la tête magnétique du terminal de paiement en lui faisant croire qu'une carte virtuelle a été insérée. Le ou les modules du terminal de communication de l'utilisateur sont donc utilisés pour créer un signal qui même s'il pas n'imite parfaitement un encodage F2F de carte magnétique est captable par la tête magnétique du terminal de paiement.

Ce mode de transmission dépend des modules GPRS et bluetooth présents à bord des mobiles.

Dans un mode de réalisation de la technique proposée, de manière complémentaire et non obligatoire, le terminal émetteur (qui est le terminal de communication de l'utilisateur) est connecté à un dispositif complémentaire, en possession de l'utilisateur. Dans ce mode de réalisation, c'est ce dispositif complémentaire qui met en œuvre la méthode de chiffrement et/ou de transmission de la donnée chiffrée au terminal de paiement par l'intermédiaire d'un module de transmission idoine.

Dans un mode de réalisation de la technique proposée, de manière complémentaire et non obligatoire, le dispositif complémentaire en possession de l'utilisateur est connecté sur une prise « jack » audio du terminal de communication de l'utilisateur. Le terminal de communication transmet donc des données au dispositif en utilisant cette interface ; Dans ce mode de réalisation, il reçoit également des données de ce dispositif en utilisant la même interface (mais en utilisant l'anneau jack « microphone »).

Ainsi, le mobile peut à la fois émettre un signal (en modulant un « son » dans une bobine) mais aussi d'entendre un son modulé soit par l'extérieur via son microphone, soit de manière plus astucieuse, directement par la prise Jack. Il en résulte un accessoire de faible distance permettant d'émettre une information de terminal à terminal à faible distance.

### 5.3. Autres caractéristiques et avantages

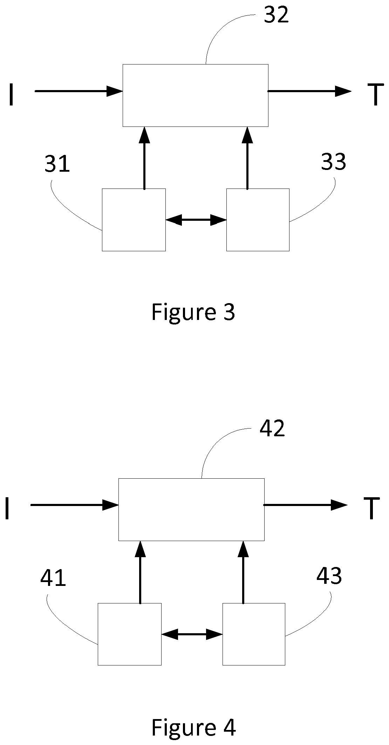

On décrit, en relation avec la figure 3, un terminal émetteur (TermE) mis en œuvre pour réaliser les transactions selon le procédé décrit préalablement.

Par exemple, le terminal comprend une mémoire 31 constituée d'une mémoire tampon, une unité de traitement 32, équipée par exemple d'un microprocesseur, et pilotée par le programme d'ordinateur 33, mettant en œuvre un procédé de chiffrement et de transmission de données.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins une donnée représentative d'un identifiant et une donnée représentative d'un temps courant. Le microprocesseur de l'unité de traitement 32 met en œuvre les étapes du procédé de chiffrement et de transmission, selon les instructions du programme d'ordinateur 33.

Pour cela, le dispositif comprend, outre la mémoire tampon 31, des moyens de communications, tels que des modules de communication réseau, des moyens de transmission de donnée et éventuellement un processeur dédié au chiffrement.

Dans un mode de réalisation particulier de l'invention, le terminal émetteur (TermE), pouvant être un Smartphone, une tablette, un ordinateur portable, un PDA, intègre des moyens de chiffrement et de transmission tels que décrit précédemment. Ces moyens peuvent se présenter sous la forme d'un processeur particulier implémenté au sein du terminal, ledit processeur étant un processeur sécurisé. Selon un mode de réalisation particulier, ce terminal met en œuvre une application particulière qui est en charge de la gestion du chiffrement et de la transmission, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Dans un autre mode de réalisation, l'application de gestion installée sur le terminal comprend également d'identification uniques permettent soit d'assurer l'authenticité de l'application soit d'assurer l'identification du porteur du terminal, soit les deux.

On décrit, en relation avec la figure 4, un terminal récepteur (TermR) mis en œuvre pour réceptionner et décoder les données chiffrées, du point de vue du terminal récepteur (TermR), selon le procédé décrit préalablement.

Par exemple, le terminal récepteur (TermR) comprend une mémoire 41 constituée d'une mémoire tampon, une unité de traitement 42, équipée par exemple d'un microprocesseur, et pilotée par le programme d'ordinateur 43, mettant en œuvre un procédé réception et de déchiffrement de données reçues d'un autre terminal.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée au moins une donnée chiffrée. Le microprocesseur de l'unité de traitement 42 met en œuvre les étapes du procédé de traitement de données chiffrées reçues, selon les instructions du programme d'ordinateur 43.

Pour cela, le terminal récepteur (TermR) comprend, outre la mémoire tampon 41, des moyens de communications, tels que des modules de communication réseau, des moyens de transmission de donnée et éventuellement un processeur de chiffrement.

Ces moyens peuvent se présenter sous la forme d'un processeur particulier implémenté au sein du terminal récepteur (TermR), ledit processeur étant un processeur sécurisé. Selon un mode de réalisation particulier, ce terminal récepteur (TermR) met en œuvre une application particulière qui est en charge de la réception et du décodage des données, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le terminal récepteur (TermR) comprend en outre des moyens d'obtention, à partir de la donnée à chiffrer, de la donnée d'identification N et de la donnée temporelle de transmission (DTT) en réalisant une opération inverse de celle réalisée par le terminal émetteur (TermE) et des moyens de validation de la donnée d'identification N en fonction de la donnée temporelle de transmission (DTT) et d'une donnée temporelle courante (DTC) dudit terminal récepteur (TermR). Ces moyens se présentent également comme des interfaces de communications permettant d'échanger des données sur des réseaux de communication, des moyens d'interrogations et de mise à jour de base de données, des moyens de comparaisons de données de localisation.

## Revendications

1. Procédé de transmission de données, d'un premier terminal, dit terminal émetteur (TermE) vers un deuxième terminal, dit terminal récepteur (TermR), procédé comprenant une étape d'obtention (100) d'une donnée temporelle courante (DTC), ledit procédé étant **caractérisé en ce qu'**il comprend :
- une étape de détermination (110) d'une donnée temporelle de transmission (DTT) en fonction de la donnée temporelle courante (DTC) et d'au moins un paramètre prédéterminé comprenant une durée (t) à ajouter à la donnée temporelle courante pour obtenir la donnée temporelle de transmission ;
- une étape d'obtention (120) d'une donnée à chiffrer (DaCh) à partir d'au moins une donnée à transmettre (DaTr) et de ladite au moins une donnée temporelle de transmission (DTT) ;
- une étape de chiffrement (130), à l'aide d'une clé de chiffrement (KeyC), de ladite donnée à chiffrer (DaCh) préalablement obtenue, délivrant une donnée chiffrée (DCh) ;
- une étape de transmission de ladite donnée chiffrée (DCh) en fonction de ladite donnée temporelle de transmission (DTT) comprenant une étape de mise en attente de la transmission jusqu'à un temps sensiblement proche de la donnée temporelle de transmission et lorsque ce temps est atteint, une étape de transmission de ladite donnée chiffrée à un temps sensiblement égal au temps défini par la donnée temporelle de transmission.

2. Procédé selon la revendication 1, **caractérisé en ce que** l'étape de détermination (110) de la donnée temporelle de transmission (DTT) comprend une étape d'ajout d'une durée définie par le paramètre prédéterminé à la donnée temporelle courante (DTC) ;

3. Procédé selon la revendication 1, **caractérisé en ce que** l'étape d'obtention (120), de la donnée à chiffrer (DaCh) comprend une étape de concaténation de ladite au moins une donnée à transmettre (DaTr) et de ladite au moins une donnée temporelle de transmission (DTT).

4. Dispositif de transmission de données mis en œuvre par un premier terminal, dit terminal émetteur (TermE) pour transmettre des données vers un deuxième terminal, dit terminal récepteur (TermR), dispositif comprenant des moyens d'obtention d'une donnée temporelle courante (DTC),
Ledit dispositif étant **caractérisé en ce qu'**il comprend :
- des moyens de détermination d'une donnée temporelle de transmission (DTT) en fonction de la donnée temporelle courante (DTC) et d'au moins un paramètre prédéterminé comprenant une durée (t) à ajouter à la donnée temporelle courante pour obtenir la donnée temporelle de transmission ;
- des moyens d'obtention d'une donnée à chiffrer à partir d'au moins une donnée à transmettre (DaTr) et de ladite au moins une donnée temporelle de transmission (DTT) ;
- des moyens de chiffrement, à l'aide d'une clé de chiffrement, de ladite donnée à chiffrer (DaCh) préalablement obtenue, délivrant une donnée chiffrée (DCh) ;
- des moyens de transmission de ladite donnée chiffrée (DCh) en fonction de ladite donnée temporelle de transmission (DTT) comprenant une étape de mise en attente de la transmission jusqu'à un temps sensiblement proche de la donnée temporelle de transmission et lorsque ce temps est atteint, une étape de transmission de ladite donnée chiffrée à un temps sensiblement égal au temps défini par la donnée temporelle de transmission.

5. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de transmission selon la revendication 1, lorsqu'il est exécuté sur un ordinateur.

## Patentansprüche

1. Verfahren zum Übertragen von Daten von einem ersten Endgerät, dem Sender-Endgerät (TermE) an ein zweites Endgerät, das Empfänger-Endgerät (TermR), Verfahren, das einen Schritt des Erhaltens (100) einer aktuellen zeitlichen Dateneinheit (DTC) aufweist, wobei das Verfahren **dadurch gekennzeichnet ist, dass** es aufweist:
- einen Schritt des Bestimmens (110) einer zeitlichen Übertragungsdateneinheit (DTT) in Abhängigkeit von der aktuellen zeitlichen Dateneinheit (DTC) und von mindestens einem vorbestimmten Parameter, umfassend eine Dauer (t), die zu der aktuellen zeitlichen Dateneinheit hinzuzufügen ist, um die zeitliche Übertragungsdateneinheit zu erhalten;
- einen Schritt des Erhaltens (120) einer zu verschlüsselnden Dateneinheit (DaCh) ausgehend von mindestens einer zu übertragenden Dateneinheit (DaTr) und von der mindestens einen zeitlichen Übertragungsdateneinheit (DTT);
- einen Schritt des Verschlüsselns (130) der zuvor erhaltenen zu verschlüsselnden Dateneinheit (DaCh) mit Hilfe von einem Verschlüsselungsschlüssel (KeyC), wodurch eine verschlüsselte Dateneinheit (DCh) erhalten wird;
- einen Schritt des Übertragens der verschlüsselten Dateneinheit (DCh) in Abhängigkeit von der zeitlichen Übertragungsdateneinheit (DTT), umfassend einen Schritt des Einreihens in eine Warteschlange des Übertragens bis zu einem Zeitpunkt, der im Wesentlichen nahe der zeitlichen Übertragungsdateneinheit liegt, und wenn dieser Zeitpunkt erreicht wird, einen Schritt des Übertragens der verschlüsselten Dateneinheit zu einem Zeitpunkt, der im Wesentlichen gleich dem Zeitpunkt ist, der von der zeitlichen Übertragungsdateneinheit definiert wird.

2. Verfahren nach Anspruch 1, **dadurch gekennzeichnet, dass** der Schritt des Bestimmens (110) der zeitlichen Übertragungsdateneinheit (DTT) einen Schritt des Hinzufügens einer Dauer, die von dem vorbestimmten Parameter definiert wird, zu der aktuellen zeitlichen Dateneinheit (DTC) aufweist.

3. Verfahren nach Anspruch 1, **dadurch gekennzeichnet, dass** die Schritt des Erhaltens (120) der zu verschlüsselnden Dateneinheit (DaCh) einen Schritt des Verkettens der mindestens einen zu übertragenden Dateneinheit (DaTr) und der mindestens einen zeitlichen Übertragungsdateneinheit (DTT) aufweist.

4. Vorrichtung zum Übertragen von Daten, die von einem ersten Endgerät, dem Sender-Endgerät (TermE) umgesetzt wird, um Daten an ein zweites Endgerät, das Empfänger-Endgerät (TermR), zu übertragen, Vorrichtung, die Mittel zum Erhalten einer aktuellen zeitlichen Dateneinheit (DTC) aufweist,
wobei die Vorrichtung **dadurch gekennzeichnet ist, dass** sie aufweist:
- Mittel zum Bestimmen einer zeitlichen Übertragungsdateneinheit (DTT) in Abhängigkeit von der aktuellen zeitlichen Dateneinheit (DTC) und von mindestens einem vorbestimmten Parameter, umfassend eine Dauer (t), die zu der aktuellen zeitlichen Dateneinheit hinzuzufügen ist, um die zeitliche Übertragungsdateneinheit zu erhalten;
- Mittel zum Erhalten einer zu verschlüsselnden Dateneinheit ausgehend von mindestens einer zu übertragenden Dateneinheit (DaTr) und von der mindestens einen zeitlichen Übertragungsdateneinheit (DTT);
- Mittel zum Verschlüsseln der zuvor erhaltenen zu verschlüsselnden Dateneinheit (DaCh) mit Hilfe von einem Verschlüsselungsschlüssel, wodurch eine verschlüsselte Dateneinheit (DCh) erhalten wird;
- Mittel zum Übertragen der verschlüsselnden Dateneinheit (DCh) in Abhängigkeit von der zeitlichen Übertragungsdateneinheit (DTT), umfassend einen Schritt des Einreihens in eine Warteschlange des Übertragens bis zu einem Zeitpunkt, der im Wesentlichen nahe der zeitlichen Übertragungsdateneinheit liegt, und wenn dieser Zeitpunkt erreicht ist, einen Schritt des Übertragens der verschlüsselten Dateneinheit zu einem Zeitpunkt, der im Wesentlichen gleich dem Zeitpunkt ist, der von der zeitlichen Übertragungsdateneinheit definiert ist.

5. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zum Übertragen nach Anspruch 1 aufweist, wenn es auf einem Computer ausgeführt wird.

## Claims

1. Method for transmitting data from a first terminal, called a transmitter terminal (TermE), to a second terminal, called a receiver terminal (TermR), said method comprising a step (100) of obtaining a piece of current time data (DTC), said method being **characterized in that** it comprises:
- ;
- a step (110) of determining a piece of transmission time data (DTT) as a function of the piece of current time data (DTC) and at least one predetermined parameter comprising a duration (t) to be added to said piece of current time data (DTC) to obtain said a piece of transmission time data (DTT);
- a step (120) of obtaining a piece of data to be encrypted (DaCh) from at least one piece of data to be transmitted (DaTr) and from said at least one piece of transmission time data (DTT);
- a step (130) of encrypting, by means of an encryption key (KeyC), said preliminarily obtained piece of data to be encrypted (DaCh), this step delivering a piece of encrypted data (DCh);
- a step for transmitting said piece of encrypted data (DCh) as a function of said piece of transmission time data (DTT) comprising putting the transmission on hold until a time substantially close to the piece of transmission time data and upon reaching said time, transmitting said piece of encrypted data (DCh) at a time substantially equal to the time defined by said piece of transmission time data (DTT).

2. Method according to claim 1, **characterized in that** the step (110) of determining the piece of transmission time data (DTT) comprises a step of adding a duration defined by the predetermined parameter to the piece of current time data (DTC).

3. Method according to claim 1, **characterized in that** the step (120) of obtaining the piece of data to be encrypted (DaCh) comprises a step of concatenation of said at least one piece of data to be transmitted (DaTr) and said at least one piece of transmission time data (DTT).

4. Device for transmitting data implemented by a first terminal, called a transmitter terminal (TermE), to a second terminal called a receiver terminal (TermR), said device means for obtaining a piece of current time data (DTC), said device being **characterized in that** it comprises:
- means for determining a piece of transmission time data (DTT) as a function of the piece of current time data and of at least one predetermined parameter comprising a duration (t) to be added to said piece of current time data (DTC) to obtain said a piece of transmission time data (DTT);
- means for obtaining a piece of data to be encrypted from at least one piece of data to be transmitted (DaTr) and from said at least one piece of transmission time data (DTT);
- means for encrypting said preliminarily obtained piece of data to be encrypted (DaCh) by means of an encryption key, delivering a piece of encrypted data (DCh);
- means for transmitting said piece of encrypted data (DCh) as a function of said piece of transmission time data (DTT) comprising putting the transmission on hold until a time substantially close to the piece of transmission time data and upon reaching said time, transmitting said piece of encrypted data (DCh) at a time substantially equal to the time defined by said piece of transmission time data (DTT).

5. Computer program product downloadable from a communications network and/or stored on a computer-readable carrier and/or executable by a microprocessor, **characterized in that** it comprises program code instructions to execute the method for sending according to claim 1, when it is executed on a computer.
